# EUROPÄISCHE PATENTANMELDUNG

(11) **EP 3 153 380 A1**
(43) Veröffentlichungstag der Anmeldung: **12.04.2017**
(21) Anmeldenummer: 16187866.5
(22) Anmeldetag: 08.09.2016
(51) Int. Cl.: B62D 1/06, B62D 7/22, F16F 7/10

(54) **LENKRAD FÜR EIN FAHRZEUG**

(30) Priorität: 07.10.2015 DE 102015013009
(71) Anmelder: AUDI AG, 85045 Ingolstadt (DE)
(72) Erfinder: Waninger, Robert, 85055 Ingolstadt (DE); Pfitzmaier, Peter, 85055 Ingolstadt (DE); Schleburg, Peter, 85395 Unterhaindlfing (DE)

(57) **Zusammenfassung**

Lenkrad (1) für ein Fahrzeug, aufweisend ein Kranzskelett (2) und mindestens eine das Kranzskelett (2) zumindest teilweise umhüllende Kranzhülle (3), wobei das Kranzskelett (2) und die mindestens eine Kranzhülle (3) mit ihren jeweiligen Grenzflächen aufeinander liegen und wobei die Grenzflächen in mindestens einem Abschnitt relativ zueinander verschiebbar sind.

## Beschreibung

Die vorliegende Erfindung betrifft ein Lenkrad für ein Fahrzeug nach dem Oberbegriff des Patentanspruch 1.

Derartige Lenkräder werden im Fahrzeugbau zur Eingabe eines Fahrerwunsches zum Richtungswechsel des Fahrzeugs mittels einer Drehbewegung verwendet. Da der allgemeine Trend im Fahrzeugbau in Richtung Gewichtsreduzierung geht, werden auch bei Lenkrädern häufig leichtere Strukturen eingesetzt. Diese werden aber bereits durch geringere Anregungsenergien zur Schwingung angeregt, weshalb wiederum Maßnahmen erforderlich sind, die diese störenden Schwingungen bedämpfen. Zum Einen wird versucht die Eigenfrequenz des Lenkrads so auszulegen, dass diese durch externe Anregung nicht hervorgerufen wird und zum Anderen werden zusätzliche Schwingungstilger in das Lenkrad eingebaut.

Die EP 1 733 949 A2 offenbart eine Lenkradanordnung mit einem Schwingungstilger, aufweisend eine Lenkradnabe, die mit einer Mehrzahl von Speichen mit dem Lenkradkranz verbunden ist, wobei eine hohle Röhre um den Lenkradkranz herum verläuft. Ein Stopfen ist in der Röhre angeordnet und die Röhre ist mit einem Fluid und einem Gas befüllt. Die dauerhaft sichere Aufbewahrung von Gasen und Fluiden in einem Lenkradkranz stellt jedoch eine große Herausforderung dar, die nur mit erhöhten Kosten bewältigt werden kann.

Die gattungsbildende DE 200 16 639 U1 zeigt ein Lenkrad mit einem Kranzskelett und einer Kranzhülle, wobei zwischen dem Kranzskelett und der Kranzhülle mindestens ein schwingungsdämpfendes Element angeordnet ist. Als schwingungsdämpfende Elemente werden unter anderem Ringe vorgeschlagen, die aus einem schwingungsdämpfenden Material oder Verbundmaterial bestehen und die im Abstand voneinander auf dem Kranzskelett angeordnet sind und die Kranzhülle stützen. Diese schwingungsdämpfenden Elemente erhöhen wiederum den Herstellungsaufwand und bringen, je nach Ausführungsform, zusätzliches Gewicht in das Lenkrad ein.

Aufgabe der vorliegenden Erfindung ist es daher ein Lenkrad für ein Fahrzeug bereitzustellen, bei dem störende Schwingungen mit möglichst einfachen Mitteln bedämpft werden können.

Diese Aufgabe wird gelöst durch die Merkmale des Patentanspruchs 1.

Ein Lenkrad für ein Fahrzeug weist ein Kranzskelett und mindestens eine das Kranzskelett zumindest teilweise umhüllende Kranzhülle auf, wobei das Kranzskelett und die mindestens eine Kranzhülle mit ihren jeweiligen Grenzflächen aufeinander liegen und wobei die Grenzflächen in mindestens einem Abschnitt relativ zueinander verschiebbar sind.

Indem die Grenzflächen sich in mindestens einem Abschnitt relativ zueinander verschieben können, entsteht zwangsläufig Reibung zwischen den Grenzflächen, die Schwingungsenergie abbaut. Die entstehende Antwortfrequenz des Kranzskeletts kann durch diese definierte Reibung deutlich schneller abklingen und damit die Schwingungsamplituden insgesamt reduzieren. Als relativer Verschiebeweg zwischen den Grenzflächen ist vorliegend auch eine vollständig relaxierende Verschiebung zu sehen, die aus einer elastische Verformung zwischen den Grenzflächen resultiert. Die Dämpfungsrate ist durch geeignete Wahl der Reibungspartner, also der beiden Grenzflächen, zu modifizieren. Zudem wird durch die Trennung von Kranzskelett und Kranzhülle in dem mindestens einen Abschnitt ein Mehrmassenschwinger erzeugt, der es erlaubt die Antwortfrequenz des gesamten Lenkrads gezielt zu beeinflussen. Das Kranzskelett besteht bevorzugt aus einer Metalllegierung, beispielsweise auf Grundlage von Eisen, Aluminium oder Magnesium. Die Kranzhülle hingegen kann im Wesentlichen aus einem geschäumten Polyurethan bestehen. Das Lenkrad als solches weist in der Regel eine zentrale Lenkradnabe auf, die mit einer oder mehreren Lenkradspeichen mit einem Lenkradkranz verbunden ist. Das Kranzskelett erstreckt sich zumindest innerhalb des Lenkradkranzes und bevorzugt auch in die Lenkradspeichen hinein, wo es dem Lenkrad die notwendige mechanische Stabilität verleiht. Die Kranzhülle dient in erster Linie dazu eine gewünschte Haptik für den Fahrer des Fahrzeugs bereitzustellen.

In einer bevorzugten Ausführung sind die Grenzflächen außerhalb des mindestens einen Abschnitts adhäsiv miteinander verbunden. Dadurch wird verhindert, dass die Relativverschiebung von Kranzhülle zu Kranzskelett unzulässig hoch wird, was die Funktion und das ästhetische Empfinden negativ beeinflussen könnte. Eine adhäsive Verbindung kann wahlweise durch Einbringen eines Klebstoffes zwischen Kranzskelett und Kranzhülle außerhalb des mindestens einen Abschnitts oder direkt beim Umschäumen des Kranzskeletts mit der Kranzhülle erzeugt werden, indem das verwendete Material der Kranzhülle klebende Eigenschaften besitzt.

In einer bevorzugten Ausführung wird die relative Verschiebbarkeit der Grenzflächen durch eine entsprechende Materialpaarung und/oder Oberflächenbeschaffenheit der Grenzflächen erreicht. Hier bieten sich beispielsweise Materialpaarungen an, die ohne Haftvermittler leicht gegeneinander verrutschen. Alternativ oder unterstützend können die Oberflächen der entsprechenden Grenzflächen derart ausgestaltet sein, dass eine gewünschte Reibung mit ausreichender Relativverschiebung gegeben ist.

In einer bevorzugten Ausführung ist zwischen den Grenzflächen in dem mindestens einen Abschnitt ein Gleitmittel eingebracht. Ein Gleitmittel ermöglicht eine gezielte Relativverschiebung der Grenzflächen zueinander, indem es die Anhaftung der Grenzflächen in dem mindestens einen Abschnitt modifiziert.

In einer bevorzugten Ausführung ist das Gleitmittel ein Silikon. Ein Silikon trennt die beiden Grenzflächen in dem mindestens einen Abschnitt zuverlässig und absorbiert einen Teil der Reibungsenergie bei der Relativverschiebung der Grenzflächen.

In einer bevorzugten Ausführung ist das Gleitmittel ein Geflecht. Das Geflecht in Form eines Metall- oder Kunststoffgewebes wird um das Kranzskelett in dem mindestens einen Abschnitt gelegt und erhöht die Reibungsverluste zwischen den Grenzflächen entsprechend.

In einer bevorzugten Ausführung ist das Gleitmittel ein Granulat. Das Granulat enthält makroskopische Feststoffe, welche die Reibungsverluste zwischen den Grenzflächen in dem mindestens einen Abschnitt erhöhen und gleichzeitig die quasistatischen Verformungen reduzieren. Das Granulat kann Metallspäne, Kunststoffe oder Fasern enthalten. Vorzugsweise ist der Durchmesser der Feststoffe um etwa eine Zehnerpotenz geringer als der Spalt zwischen den Grenzflächen, den sie ausfüllen. Handelt es sich um Fasern, so können diese in Längserstreckung auch länger sein, als der Spalt zwischen den Grenzflächen breit ist.

In einer bevorzugten Ausführung ist die Kranzhülle mehrschichtig, insbesondere bestehend aus verschiedenen gepaarten Grenzflächen nach einer erfindungsgemäßen Ausführung, aufgebaut. Ein mehrschichtiger Aufbau ermöglicht komplexere Kranzhüllen, beispielsweise mit speziellen Bezugsmaterialien wie einem Lederbezug. Auf das geschäumte Polyurethan wäre dann eine Schicht aus Leder aufzuziehen. Weiterhin können auch noch zusätzliche Komponenten, wie beispielsweise elektrische Drähte für eine Lenkradheizung oder kapazitive bzw. resistive Sensoren als Metallschichten und/oder Metallgelege, in den Basiskörper der Kranzhülle eingelassen sein. Die Ausführungsarten der Grenzflächen sind entsprechend der gewünschten Eigenschaften auszuwählen.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
- Fig. 1: ein Lenkrad für ein Fahrzeug;
- Fig. 2: einen Querschnitt durch einen Teil eines Lenkrads.

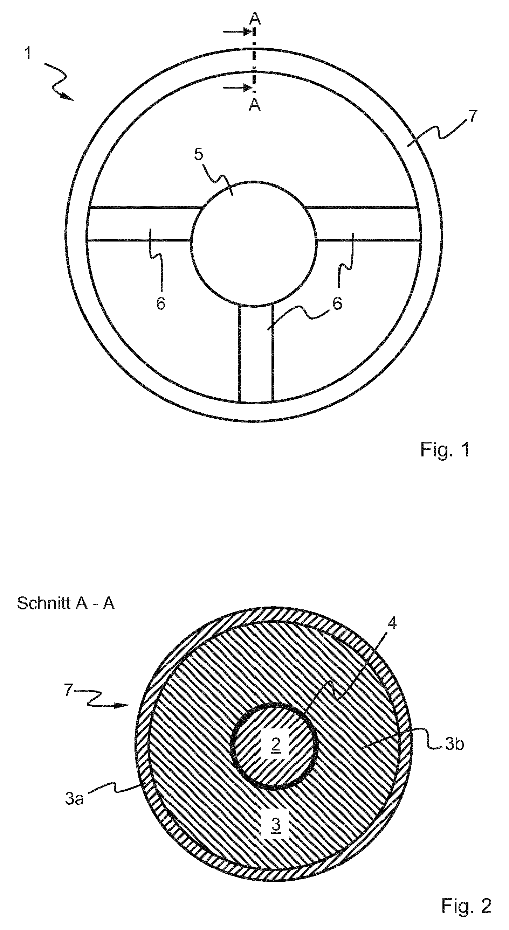

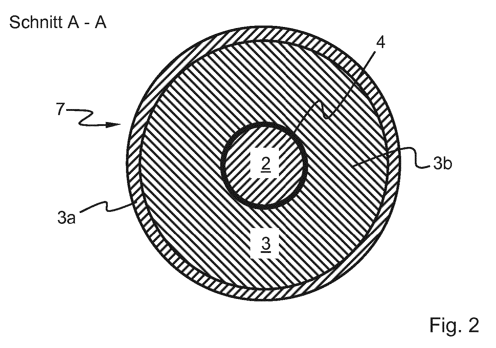

Gemäß der Fig. 1 hat ein Lenkrad 1 eine Lenkradnabe 5, die mittels mehrerer Lenkradspeichen 6 mit einem Lenkradkranz 7 verbunden ist. Der Lenkradkranz 7 ist der Teil des Lenkrads 1, der gewöhnlich vom Fahrer des Fahrzeugs zur Eingabe des Lenkwunsches umgriffen wird. Die Lenkradnabe 5 ist mit einer nicht dargestellten Lenksäule verbunden, über die Schwingungen von der Fahrbahn oder den Aggregaten des Fahrzeugs in das Lenkrad 1 übertragen werden.

Die Fig. 2 zeigt eine Ansicht des Schnitts A-A durch den Lenkradkranz 7 aus der Fig. 1. Demgemäß weist der Lenkradkranz 7 in seinem Zentrum ein Kranzskelett 2 aus Magnesium auf, welches die Stabilität des Lenkradkranzes 7 gewährleistet. Das Kranzskelett 2 wird von einer Kranzhülle 3 umhüllt, die vorliegend einen mehrschichtigen Aufbau mit einem Basiskörper 3b aus Polyurethan und einem diesen umhüllenden Lederbezug 3a, der vom Fahrer des Fahrzeugs umgriffen werden kann, aufweist. Die Grenzflächen des Basiskörpers 3b der Kranzhülle 3 und des Kranzskeletts 2 liegen aufeinander. In mindestens einem Abschnitt entlang des Umfangs des Lenkradkranzes 7 ist zwischen diese Grenzflächen ein Gleitmittel 4 eingebracht, das eine reibungsbehaftete Relativbewegung von Kranzhülle 3 zu Kranzskelett 2 in diesem mindestens einem Abschnitt zulässt. Ansonsten ist der Basiskörper 3b der Kranzhülle 3 adhäsiv mit dem Kranzskelett 2 verbunden.

### Liste der Bezugszeichen:

- 1: Lenkrad
- 2: Kranzskelett
- 3: Kranzhülle
- 3a: Lederbezug
- 3b: Basiskörper
- 4: Gleitmittel
- 5: Lenkradnabe
- 6: Lenkradspeiche
- 7: Lenkradkranz

## Patentansprüche

1. Lenkrad (1) für ein Fahrzeug, aufweisend ein Kranzskelett (2) und mindestens eine das Kranzskelett (2) zumindest teilweise umhüllende Kranzhülle (3), wobei das Kranzskelett (2) und die mindestens eine Kranzhülle (3) mit ihren jeweiligen Grenzflächen aufeinander liegen, **dadurch gekennzeichnet, dass** die Grenzflächen in mindestens einem Abschnitt relativ zueinander verschiebbar sind.

2. Lenkrad (1) nach Anspruch 1, **dadurch gekennzeichnet, dass** die Grenzflächen außerhalb des mindestens einen Abschnitts adhäsiv miteinander verbunden sind.

3. Lenkrad (1) nach Anspruch 1 oder 2, **dadurch gekennzeichnet, dass** die relative Verschiebbarkeit der Grenzflächen durch eine entsprechende Materialpaarung und/oder Oberflächenbeschaffenheit der Grenzflächen erreicht wird.

4. Lenkrad (1) nach einem der Ansprüche 1 bis 3, **dadurch gekennzeichnet, dass** zwischen den Grenzflächen in dem mindestens einen Abschnitt ein Gleitmittel (4) eingebracht ist.

5. Lenkrad (1) nach Anspruch 4, **dadurch gekennzeichnet, dass** das Gleitmittel (4) ein Silikon ist.

6. Lenkrad (1) nach Anspruch 4, **dadurch gekennzeichnet, dass** das Gleitmittel (4) ein Geflecht ist.

7. Lenkrad (1) nach Anspruch 4, **dadurch gekennzeichnet, dass** das Gleitmittel (4) ein Granulat ist.

8. Lenkrad (1) nach einem der Ansprüche 1 bis 7, **dadurch gekennzeichnet, dass** die Kranzhülle (3) mehrschichtig aufgebaut ist.
